(19) Europäisches Patentamt
European Patent Office
Office européen des brevets

(11) **EP 2 898 289 B1**

(12) **FASCICULE DE BREVET EUROPEEN**

(45) Date de publication et mention de la délivrance du brevet:
**02.11.2016 Bulletin 2016/44**

(21) Numéro de dépôt: **13779622.3**

(22) Date de dépôt: **20.09.2013**

(51) Int Cl.:
**G01B 21/18** *(2006.01)*  **G01N 25/72** *(2006.01)*
**G01B 11/22** *(2006.01)*

(86) Numéro de dépôt international:
**PCT/FR2013/052185**

(87) Numéro de publication internationale:
**WO 2014/044986 (27.03.2014 Gazette 2014/13)**

(54) **PROCEDE D'EVALUATION DE LA PROFONDEUR D'UNE FISSURE**

VERFAHREN ZUR BEURTEILUNG DER TIEFE EINES RISSES

METHOD FOR ASSESSING THE DEPTH OF A CRACK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2012 FR 1258940**

(43) Date de publication de la demande:
**29.07.2015 Bulletin 2015/31**

(73) Titulaires:
• **Centre National de la Recherche Scientifique 75016 Paris (FR)**
• **Université Pierre et Marie Curie (Paris 6) 75005 Paris (FR)**

(72) Inventeurs:
• **BOUE, Christine**
  **F-93160 Noisy Le Grand (FR)**
• **TESSIER, Gilles**
  **F-75010 Paris (FR)**
• **ROGER, Jean-Paul**
  **F-94230 Cachan (FR)**
• **STREZA, Mihaela**
  **R-400510 Cluj Napoca (RO)**

(74) Mandataire: **Allain, Laurent et al Ipsilon Le Centralis 63, avenue du Général Leclerc 92340 Bourg-la-Reine (FR)**

(56) Documents cités:
**US-A- 5 376 793**

• **SCHLICHTING J ET AL: "Crack sizing by laser excited thermography", NDT & E INTERNATIONAL, BUTTERWORTH-HEINEMANN, OXFORD, GB, vol. 45, no. 1, 23 septembre 2011 (2011-09-23), pages 133-140, XP028111805, ISSN: 0963-8695, DOI: 10.1016/J.NDTEINT.2011.09.014 [extrait le 2011-10-20]**
• **LAHIRI B B ET AL: "Quantification of defects in composites and rubber materials using active thermography", INFRARED PHYSICS AND TECHNOLOGY, vol. 55, no. 2, 21 janvier 2012 (2012-01-21), pages 191-199, XP028467728, ISSN: 1350-4495, DOI: 10.1016/J.INFRARED.2012.01.001 [extrait le 2012-01-21]**
• **NAKATA T ET AL: "SIMULATION OF PHOTOACOUSTIC IMAGING OF MICROCRACKS IN SILICON WAFERS USING A STRUCTURE-CHANGEABLE MULTILAYERED THERMAL DIFFUSION MODEL", APPLIED OPTICS, OPTICAL SOCIETY OF AMERICA, WASHINGTON, DC; US, vol. 46, no. 7, 1 mars 2007 (2007-03-01), pages 1019-0125, XP001504675, ISSN: 0003-6935, DOI: 10.1364/AO.46.001019**

**Description**

La présente invention a pour objet un procédé d'évaluation de la profondeur d'une fissure au voisinage de la surface d'un matériau, en particulier d'un matériau métallique. Elle a également pour objet un procédé permettant, en plus de l'évaluation de la profondeur de la fissure, de localiser ladite fissure.

La détection des défauts à la surface des pièces métalliques, comme par exemple les fissures, ainsi que leur qualification et l'estimation de leurs dimensions, se fait typiquement à l'aide de la technique de ressuage.

Cette technique est toutefois polluante et est soumise à l'appréciation humaine, ce qui génère des problèmes de répétabilité et la rend non automatisable. Il apparaît donc important de trouver une technique objective et robuste permettant de détecter et d'apporter une information fiable sur la profondeur des fissures, dans le cadre d'un contrôle non destructif à échelle industrielle.

La présente invention permet d'atteindre ces objectifs.

Elle a ainsi pour objet un procédé d'évaluation de la profondeur d'une fissure au voisinage de la surface d'un matériau.

Le procédé selon l'invention comprend les étapes suivantes :

- chauffage d'une zone située à proximité de la fissure, à l'aide d'une source de chaleur modulable périodiquement en flux de chaleur selon une fréquence réglable, appelée fréquence de modulation,
- variation de la fréquence, de manière à faire varier la longueur de diffusion thermique entre une valeur initiale inférieure à la distance entre la zone chauffée et la fissure et une valeur finale supérieure à la distance entre la zone chauffée et la fissure,

la valeur de la longueur de diffusion thermique étant donnée par la relation :

$$\mu = a.(D/f)^{1/2}$$

dans laquelle :

$\mu$ désigne la longueur de diffusion thermique, a désigne une constante réelle, D désigne la diffusivité thermique du matériau en m$^2$/s, et f désigne la fréquence de modulation de la source de chaleur périodique en Hz,

- détermination de l'évolution, en fonction de la longueur de diffusion thermique, d'une fonction basée sur au moins une dérivée, par rapport à une variable d'espace, de l'amplitude de la composante sinusoïdale de la température à la surface du matériau et à la fréquence de modulation, au niveau de chacun des points d'un ensemble de points de la fissure, de manière à faire apparaître une première zone d'évolution de la fonction dans laquelle ladite fonction augmente selon une première pente non nulle, suivie d'une deuxième zone d'évolution dans laquelle ladite fonction augmente selon une deuxième pente différente de la première pente, et

- évaluation de la profondeur de la fissure en fonction de la valeur de la longueur de diffusion thermique à l'intersection de la première zone d'évolution et de la deuxième zone d'évolution, dite longueur d'intersection.

Dans le cas d'une modulation sinusoïdale du flux de chaleur, la valeur de la longueur de diffusion thermique peut être donnée par la relation :

$$\mu = \sqrt{\frac{D}{\Box \pi f}}$$

L'ensemble de points peut comprendre un ou de préférence plusieurs points de manière à déterminer plus précisément l'évolution de la fonction.

L'évolution de la fonction peut être obtenue en réalisant une moyenne ou un traitement mathématique sur les évolutions de la fonction obtenues pour l'ensemble des points.

La distance entre la zone chauffée et la fissure peut être estimée par toute valeur représentative de cette distance, par exemple par la distance la plus courte entre la zone chauffée et la fissure, ou encore par la distance entre le barycentre de la zone chauffée et la fissure.

Ladite fonction peut être le laplacien appliqué à l'amplitude de la composante sinusoïdale de la température à la fréquence de modulation.

La longueur d'intersection peut par exemple être obtenue en appliquant un critère dépendant du lieu de changement de pente. On peut par exemple déterminer le point d'intersection de la courbe d'évolution de la fonction et d'une courbe choisie sécante à la fonction dans sa zone de changement de pente. On peut également ajuster la courbe d'évolution de la fonction par une fonction mathématique dont un des paramètres permet d'obtenir la longueur d'intersection. Au moins un des paramètres de ladite fonction mathématique peut par exemple être déterminé à partir de l'évolution, en fonction de la longueur de diffusion thermique, d'une fonction (qui peut être basée sur au moins une dérivée, par rapport à une variable d'espace) de la phase de la composante sinusoïdale de la température à la surface du matériau et à la fréquence de modulation.

La profondeur de la fissure peut être estimée à l'aide de la relation suivante :

$$h^* = \left(\mu_2{}^2 - d^2\right)^{1/2}$$

dans laquelle $\mu_2$ désigne la longueur d'intersection et d désigne la distance entre un point donné de la fissure et le point le plus proche de la source de chaleur.

La source de chaleur peut être créée par l'absorption à la surface du matériau d'un flux de lumière issu d'une source de lumière, ou par un composant utilisant l'effet Peltier ou l'effet Joule.

La source de lumière peut être une source laser ou une lampe à arc, ou une lampe à filament.

La zone de chauffage située à proximité de la fissure peut être située à une distance du bord de la fissure comprise entre 0.5 et 2 mm.

La fréquence peut varier entre 0.1 Hz et 20 Hz.

Le procédé peut mettre en oeuvre une caméra thermique.

Le procédé peut comprendre en outre une étape de détection de la fissure.

La détection de la fissure peut être obtenue en mettant en oeuvre, en différents points d'une zone entourant la fissure, une transformée de Fourier temporelle de la température en chaque point, suivie d'un calcul du laplacien (ou d'une autre fonction utilisant au moins une dérivée spatiale) de l'amplitude de la composante sinusoïdale de la température à la fréquence de modulation.

D'autres caractéristiques et avantages de la présente invention apparaîtront plus clairement à la lecture de la description suivante donnée à titre d'exemple illustratif et non limitatif et faite en référence aux figures suivantes sur lesquelles :

-   la figure 1 illustre schématiquement un dispositif permettant de mettre en oeuvre le procédé selon l'invention, et
-   les figures 2 et 3 sont différents diagrammes utiles à la compréhension du procédé.

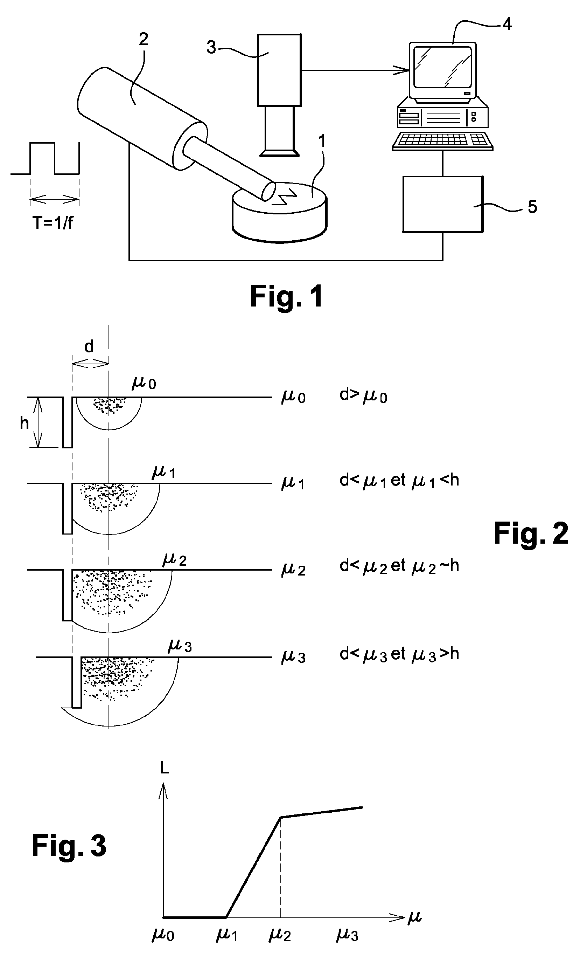

Tel qu'illustré à la figure 1, un échantillon métallique 1 est chauffé périodiquement à l'aide d'une source de chaleur 2. Les images thermiques sont saisies grâce à une caméra infrarouge 3 couplée à un ordinateur 4. Un module de détection synchrone 5 calcule en temps réel la phase et l'amplitude du phénomène physique à la fréquence de modulation. Le module 5 permet aussi d'obtenir des images en amplitude et en phase aux fréquences harmoniques de la fréquence de modulation.

Pour localiser les fissures de l'échantillon 1, on procède à un traitement numérique de l'image de l'amplitude. On peut par exemple :

-   dériver l'image de l'amplitude en x ou en y (dans le plan xy de la surface de l'échantillon) si on souhaite privilégier une direction,
-   procéder à un calcul du laplacien, si on souhaite ne pas privilégier de direction,
-   procéder à des traitements de l'image résultante.

L'échantillon 1 est chauffé par la source de chaleur 2 d'une excitation modulée à des fréquences de modulation de 0.1 à 20 Hz et généralement focalisée sur une zone de quelques mm de diamètre. La source de chaleur 2 est placée de manière à exciter la face de l'échantillon 1 à inspecter.

Le signal infrarouge est détecté par la caméra infrarouge 3 en détection synchrone. La durée de la mesure dépend du nombre de cycles moyennés. Elle est généralement de quelques secondes.

La suite de la description est consacrée à l'évaluation de la profondeur d'une fissure au voisinage de la surface de l'échantillon 1.

Lorsqu'un matériau est chauffé ponctuellement en surface, la chaleur diffuse en surface et en profondeur. Si le stimulus thermique est périodique, la composante sinusoïdale du flux de chaleur à la fréquence de modulation s'étend sur une longueur de diffusion thermique qui dépend de la diffusivité thermique du matériau et de la fréquence de modulation. En présence d'une fissure, le flux de chaleur est localement perturbé. Une élévation de température se produit alors en amont de la fissure.

La suite de la description concerne des modélisations, donc des configurations idéalisées et simples, mais qui s'appliquent pour une large part à des cas de figure plus réalistes et complexes.

On considère le cas d'une fissure débouchante, normale à la surface, de largeur $l_{fiss}$, de longueur $L_{fiss}$ et de profondeur h.

L'échantillon fissuré est chauffé en surface par un flux de chaleur modulé à la fréquence $f_i$. La distance entre la source de chaleur et la fissure est donnée par d. A la fréquence de modulation $f_i$, la composante sinusoïdale du flux de chaleur s'étend en surface et dans l'épaisseur de l'échantillon sur une longueur de diffusion thermique $u_i$ telle que :

$$\mu_i = \sqrt{\frac{D}{\pi f_i}}$$

Pour une fréquence de modulation peu élevée, la composante sinusoïdale du flux de chaleur s'étend sur une longueur plus importante que si la fréquence de modulation est élevée.

On observe ainsi, tel qu'illustré à la figure 2 :

-   pour les longueurs de diffusion $\mu_0$ faibles devant la distance d, la composante sinusoïdale du flux de chaleur, représentée par un demi-disque, et pour plus de clarté pour des valeurs supérieures à un seuil prédéterminé, n'atteint pas la fissure,
-   pour les longueurs de diffusion $\mu_1$ de l'ordre de grandeur de d, la composante sinusoïdale du flux de chaleur atteint la fissure en surface et partiellement en volume,

- pour une longueur de diffusion $\mu_2$ sensiblement égale à la profondeur h de la fissure, la composante sinusoïdale du flux de chaleur atteint la fissure en surface et entièrement en volume, et
- pour les longueurs de diffusion $\mu_3$ supérieures à d et à la profondeur h de la fissure, la composante sinusoïdale du flux de chaleur s'étend en volume au-delà de la fissure de profondeur h.

La présence d'une fissure perturbe le flux thermique. Le laplacien de l'amplitude de la température T en surface $L = \nabla^2(T)$ est choisi comme paramètre révélateur de la fissure. Au contraire du gradient par exemple, il inclut toute direction sur la surface si on ne souhaite pas privilégier de direction.

De manière schématique, on peut tracer pour un point de la fissure l'évolution de L en fonction de $\mu$, tel qu'illustré à la figure 3 :

- pour les longueurs de diffusion faibles devant la distance d, L tend vers zéro : la fissure n'est pas atteinte,
- pour les longueurs de diffusion permettant d'atteindre la fissure en surface et partiellement en volume, L augmente, et
- pour les longueurs de diffusion supérieures à $(d^2 + h^2)^{1/2}$, L augmente plus lentement : une partie du flux thermique contourne la fissure.

Le changement de pente de la courbe de l'évolution du laplacien de l'amplitude de la composante sinusoïdale de la température à la fréquence de modulation en fonction de $\mu$ (ici pour $\mu$ qui se situe dans une région proche de $\mu_2$) constitue un indicateur de la valeur h de la profondeur de la fissure. Si d désigne la distance entre le point considéré sur la fissure et le point le plus proche de la source de chaleur, alors la valeur estimée h* de la profondeur de la fissure est donnée par la relation :

$$h^* = \sqrt{\mu_2^2 - d^2}$$

L'idée qui est d'évaluer la profondeur d'une fissure à partir de la courbe de l'évolution du laplacien de l'amplitude de la composante sinusoïdale de la température à la fréquence de modulation en fonction de la fréquence est aisément transposable du point de vue expérimental en exploitant des mesures obtenues à différentes fréquences de chauffage.

## Revendications

1. Procédé d'évaluation de la profondeur d'une fissure au voisinage de la surface d'un matériau, **caracté-**

**risé en ce qu'**il comprend les étapes suivantes :

- chauffage d'une zone située à proximité de la fissure, à l'aide d'une source de chaleur (2) modulable périodiquement en flux de chaleur selon une fréquence réglable, appelée fréquence de modulation,
- variation de la fréquence, de manière à faire varier la longueur de diffusion thermique entre une valeur initiale inférieure à la distance entre la zone chauffée et la fissure et une valeur finale supérieure à la distance entre la zone chauffée et la fissure,

la valeur de la longueur de diffusion thermique étant donnée par la relation :

$$\mu = a.(D/f)^{1/2}$$

dans laquelle :

$\mu$ désigne la longueur de diffusion thermique, a désigne une constante réelle, D désigne la diffusivité thermique du matériau en $m^2/s$, et f désigne la fréquence de la source de chaleur périodique en Hz,

- détermination de l'évolution, en fonction de la longueur de diffusion thermique, d'une fonction basée sur au moins une dérivée, par rapport à une variable d'espace, de l'amplitude de la composante sinusoïdale de la température à la surface du matériau et à la fréquence de modulation, au niveau de chacun des points d'un ensemble de points de la fissure, de manière à faire apparaître une première zone d'évolution de la fonction dans laquelle ladite fonction augmente selon une première pente non nulle, suivie d'une deuxième zone d'évolution dans laquelle ladite fonction augmente selon une deuxième pente différente de la première pente, et
- évaluation de la profondeur de la fissure en fonction de la valeur de la longueur de diffusion thermique à l'intersection de la première zone d'évolution et de la deuxième zone d'évolution, dite longueur d'intersection.

2. Procédé selon la revendication 1, **caractérisé en ce que** ladite fonction est le laplacien appliqué à l'amplitude de la composante sinusoïdale de la température à la fréquence de modulation.

3. Procédé selon la revendication 1 ou 2, **caractérisé en ce que** la courbe d'évolution de la fonction est ajustée par une fonction mathématique dont un des paramètres permet d'obtenir la longueur d'intersection.

**4.** Procédé selon la revendication 3, **caractérisé en ce qu'**au moins un des paramètres de ladite fonction mathématique est déterminé à partir de l'évolution, en fonction de la longueur de diffusion thermique, d'une fonction de la phase de la composante sinusoïdale de la température à la surface du matériau et à la fréquence de modulation.

**5.** Procédé selon l'une des revendications 1 à 4, **caractérisé en ce que** la profondeur de la fissure est estimée à l'aide de la relation suivante :

$$h^* = \left( \mu_2{}^2 - d^2 \right)^{1/2}$$

dans laquelle $\mu_2$ désigne la longueur d'intersection et d désigne la distance entre un point donné de la fissure et le point le plus proche de la source de chaleur.

**6.** Procédé selon l'une des revendications 1 à 5, **caractérisé en ce que** la source de chaleur est créée par l'absorption à la surface du matériau d'un flux de lumière issu d'une source de lumière, ou par un composant utilisant l'effet Peltier ou l'effet Joule.

**7.** Procédé selon l'une des revendications 1 à 6, **caractérisé en ce que** la zone de chauffage située à proximité de la fissure est située à une distance du bord de la fissure comprise entre 0.5 et 2 mm.

**8.** Procédé selon l'une des revendications 1 à 7, **caractérisé en ce que** la fréquence varie entre 0.1 Hz et 20 Hz.

**9.** Procédé selon l'une des revendications 1 à 8, **caractérisé en ce qu'**il met en oeuvre une caméra thermique (3).

**10.** Procédé selon l'une des revendications 1 à 9, **caractérisé en ce qu'**il comprend en outre une étape de détection de la fissure.

**11.** Procédé selon la revendication 10, **caractérisé en ce que** la détection de la fissure est obtenue en mettant en oeuvre, en différents points d'une zone entourant la fissure, une transformée de Fourier temporelle de la température en chaque point, suivie d'un calcul du laplacien de l'amplitude de la composante sinusoïdale de la température à la fréquence de modulation.

**Patentansprüche**

**1.** Verfahren zur Beurteilung der Tiefe eines Risses in der Nähe der Oberfläche eines Materials, **dadurch gekennzeichnet, dass** es die folgenden Schritte umfasst:

- Erwärmen einer Zone, die sich in der Nähe des Risses befindet, mit Hilfe einer hinsichtlich Wärmestrom in einer als Modulationsfrequenz bezeichneten einstellbaren Frequenz periodisch modulierbaren Wärmequelle (2),
- Variieren der Frequenz derart, dass die thermische Diffusionslänge zwischen einem Ausgangswert kleiner als der Abstand zwischen der erwärmte Zone und dem Riss und einem Endwert größer als der Abstand zwischen der erwärmten Zone und dem Riss variiert, wobei der Wert der thermischen Diffusionslänge gegeben ist durch die Gleichung:

$$\mu = a.(D/f)^{1/2}$$

wobei:

$\mu$ de thermische Diffusionslänge bezeichnet, a eine reelle Konstante bezeichnet, D die Wärmeleitfähigkeit des Materials in $m^2/s$ bezeichnet und f die Frequenz der periodischen Wärmequelle in Hz bezeichnet,

- Bestimmen der Entwicklung in Abhängigkeit von der thermischen Diffusionslänge einer Funktion, die auf mindestens einer Ableitung basiert, im Verhältnis zu einer Variablen des Raums, der Amplitude der Sinuskomponente der Temperatur auf der Oberfläche des Materials und in Modulationsfrequenz im Bereich aller Punkte einer Punktegruppe des Risses, um eine erste Entwicklungszone der Funktion zu ermitteln, in welcher die Funktion gemäß einer ersten Neigung ungleich Null zunimmt, gefolgt von einer zweiten Entwicklungszone, in welcher die Funktion gemäß einer zweiten Neigung, die sich von der ersten Neigung unterscheidet, zunimmt, und
- Beurteilen der Tiefe des Risses in Abhängigkeit vom Wert der thermischen Diffusionslänge am Schnittpunkt der ersten Entwicklungszone und der zweiten Entwicklungszone, bezeichnet als Schnittpunktlänge.

**2.** Verfahren nach Anspruch 1, **dadurch gekennzeichnet, dass** die Funktion der Laplace-Operator ist, angewendet auf die Amplitude der Sinuskomponente der Temperatur in Modulationsfrequenz.

**3.** Verfahren nach Anspruch 1 oder 2, **dadurch gekennzeichnet, dass** die Entwicklungskurve der Funktion von einer mathematischen Funktion korrigiert wird, von der ein Parameter erlaubt, die Schnittstellenlänge zu erhalten.

**4.** Verfahren nach Anspruch 3, **dadurch gekennzeichnet, dass** mindestens einer der Parameter der mathematischen Funktion auf der Basis der Entwicklung, in Abhängigkeit von der thermischen Diffusionslänge, einer Funktion der Phase der Sinuskomponente der Temperatur auf der Oberfläche des Materials und in Modulationsfrequenz bestimmt wird.

**5.** Verfahren nach einem der Ansprüche 1 bis 4, **dadurch gekennzeichnet, dass** die Tiefe des Risses mit Hilfe der folgenden Gleichung bestimmt wird:

$$h^* = \mu_2{}^2 - d^2)^{1/2}$$

wobei $\mu_2$ die Schnittpunktlänge bezeichnet und d den Abstand zwischen einem bestimmten Punkt des Risses und dem zur Wärmequelle nächsten Punkt bezeichnet.

**6.** Verfahren nach einem der Ansprüche 1 bis 5, **dadurch gekennzeichnet, dass** die Wärmequelle durch Absorption, an der Oberfläche des Materials, eines Lichtstroms kreiert wird, der von einer Lichtquelle ausgeht, oder von einer Komponente, die den Peltier-Effekt oder den Joule-Effekt nutzt.

**7.** Verfahren nach einem der Ansprüche 1 bis 6, **dadurch gekennzeichnet, dass** sich die Erwärmungszone, die sich in der Nähe des Risses befindet, in einem Abstand von Rand des Risses von 0,5 bis 2 mm befindet.

**8.** Verfahren nach einem der Ansprüche 1 bis 7, **dadurch gekennzeichnet, dass** die Frequenz von 0,1 Hz bis 20 Hz schwankt.

**9.** Verfahren nach einem der Ansprüche 1 bis 8, **dadurch gekennzeichnet, dass** es eine Wärmekamera (3) verwendet.

**10.** Verfahren nach einem der Ansprüche 1 bis 9, **dadurch gekennzeichnet, dass** es ferner einen Detektionsschritt des Risses umfasst.

**11.** Verfahren nach Anspruch 10, **dadurch gekennzeichnet, dass** die Detektion des Risses durch Anwendung an verschiedenen Punkten einer Zone, die den Riss umgibt, einer zeitlichen Fourier-Transformation der Temperatur an jedem Punkt, gefolgt von einer Berechnung des Laplace-Operators der Amplitude der Sinuskomponente der Temperatur in Modulationsfrequenz, erfolgt.

**Claims**

**1.** A method for assessing the depth of a crack near the surface of a material, **characterized in that** it comprises the following steps:

- heating a zone situated near the crack, using a heat source (2) whereof the heat flow can be modulated periodically according to an adjustable frequency, called modulation frequency,
- varying the frequency, so as to vary the thermal diffusion length between an initial value smaller than the distance between the heated zone and the crack and a final value larger than the distance between the heated zone and the crack, the value of the thermal diffusion length being given by the relationship:

$$\mu = a.(D/f)^{1/2}$$

where:

$\mu$ designates the thermal diffusion length, a designates a real constant, D designates the thermal diffusivity of the material in $m^2/s$, and f designates the frequency of the periodic heat source in Hz,

- determining the evolution, based on the thermal diffusion length, of a function based on at least one derivation, with respect to a space variable, of the amplitude of the sinusoidal component of the temperature on the surface of the material and at the modulation frequency, at each of the points of a set of points of the crack, so as to show a first evolution zone of the function in which said function increases according to a first non-zero slope, followed by a second evolution zone in which said function increases according to a second slope different from the first slope, and
- evaluating the depth of the crack based on the value of the thermal diffusion length at the intersection of the first evolution zone and the second evolution zone, called intersection length.

**2.** The method according to claim 1, **characterized in that** said function is the laplacian applied to the amplitude of the sinusoidal component of the temperature at the modulation frequency.

**3.** The method according to claim 1 or 2, **characterized**

**in that** the evolution curve of the function is adjusted by a mathematical function whereof one of the parameters makes it possible to obtain the intersection length.

4. The method according to claim 3, **characterized in that** at least one of the parameters of said mathematical function is determined from the evolution, with respect to the thermal diffusion length, of a function of the phase of the sinusoidal component of the temperature at the surface of the material and at the modulation frequency.

5. The method according to one of claims 1 to 4, **characterized in that** the depth of the crack is estimated using the following relationship:

$$h^* = \left(\mu_2{}^2 - d^2\right)^{1/2}$$

where $\mu_2$ designates the intersection length and d designates the distance between a given point of the crack and the closest point of the heat source.

6. The method according to one of claims 1 to 5, **characterized in that** the heat source is created by the absorption at the surface of the material of a light flow from a light source, or by a component using the Peltier effect or the Joule effect.

7. The method according to one of claims 1 to 6, **characterized in that** the heating zone situated near the crack is situated at a distance from the edge of the crack comprised between 0.5 and 2 mm.

8. The method according to one of claims 1 to 7, **characterized in that** the frequency varies between 0.1 Hz and 20 Hz.

9. The method according to one of claims 1 to 8, **characterized in that** it implements a thermal imaging camera (3).

10. The method according to one of claims 1 to 9, **characterized in that** it further comprises a step for detecting the crack.

11. The method according to claim 10, **characterized in that** the detection of the crack is obtained by implementing, at different points of a zone surrounding the crack, a temporal Fourier transform of the temperature at each point, followed by a calculation of the laplacian of the amplitude of the sinusoidal component of the temperature at the modulation frequency.

**Fig. 1**

$T=1/f$

**Fig. 2**

$\mu_0$

$\mu_0$  $d>\mu_0$

$h$

$d$

$\mu_1$

$\mu_1$  $d<\mu_1\,et\,\mu_1<h$

$\mu_2$

$\mu_2$  $d<\mu_2\,et\,\mu_2\sim h$

$\mu_3$

$\mu_3$  $d<\mu_3\,et\,\mu_3>h$

**Fig. 3**

$L$

$\mu_0$  $\mu_1$  $\mu_2$  $\mu_3$  $\mu$